# EUROPÄISCHE PATENTANMELDUNG

(11) **EP 0 681 117 A1**
(43) Veröffentlichungstag der Anmeldung: **08.11.1995**
(21) Anmeldenummer: 94120367.1
(22) Anmeldetag: 22.12.1994
(51) Int. Cl.: F16F 7/108

(54) **Lageranordnung**

(30) Priorität: 14.04.1994 DE 4412879
(71) Anmelder: Firma Carl Freudenberg, D-69469 Weinheim (DE)
(72) Erfinder: Ullrich, Günter, D-69502 Hemsbach (DE); Triesethau, Karl Heinz, D-64395 Brensbach (DE); Henrich, Uwe, D-64853 Otzberg (DE)

(57) **Zusammenfassung**

Lageranordnung, umfassend ein Gummilager (1), das durch einen ersten und einen zweiten Stützkörper (2, 3) gebildet ist, wobei die Stützkörper (2, 3) durch zumindest einen ersten Federkörper (4) aus elastomerem Werkstoff aufeinander abgestützt sind. Zumindest einer der Stützkörper (2) ist mit einem Befestigungsflansch (5) starr verbunden, wobei der Befestigungsflansch (5) und zumindest eine Trägheitsmasse (6) durch einen zweiten Federkörper (7) elastisch nachgiebig miteinander verbunden sind.

## Beschreibung

Die Erfindung betrifft eine Lageranordnung, umfassend ein Gummilager, das durch einen ersten und einen zweiten Stützkörper gebildet ist, wobei die Sützkörper durch zumindest einen ersten Federkörper aus elastomerem Werkstoff aufeinander abgestützt sind.

Derartige Lageranordnungen sind allgemein bekannt und gelangen beispielsweise zur Abstützung von Verbrennungskraftmaschinen in Kraftfahrzeugen zur Anwendung. Die Gummilager können verschiedenartig ausgebildet sein, beispielsweise als Buchsenlager oder als Lager, bei dem ein Auflager und ein Traglager in Richtung der eingeleiteten Schwingungen durch ein hohlkegelförmiges Federelement aufeinander abgestützt sind. Das Gummilager kann mit einer hydraulischen Dämpfungseinrichtung versehen sein. Es ist allerdings zu beachten, daß die Gummilager zur Dämpfung/Isolierung eingeleiteter Schwingungen häufig einen komplizierten Aufbau aufweisen, was in fertigungstechnischer und wirtschaftlicher Hinsicht wenig befriedigend ist. Außerdem weisen die Gummilager durch ihren komplizierten Aufbau große Abmessungen in axialer und radialer Richtung auf.

Der Erfindung liegt die Aufgabe zugrunde, ein solche Lageranordnung derart weiter zu entwickeln, daß eingeleitete Schwingungen gedämpft/isoliert werden können,wobei die Lageranordnung einen vergleichsweise einfachen Aufbau aufweist, derart gestaltet ist, daß sie an die jeweiligen Gegebenheiten des Einbauraums problemlos angepaßt werden kann.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Im Rahmen der vorliegenden Erfindung ist es vorgesehen, daß einer der Stützkörper mit einem Befestigungsflansch starr verbunden ist und daß der Befestigungsflansch und zumindest eine Trägheitsmasse durch einen zweiten Federkörper elastisch nachgiebig miteinander verbunden sind. Hierbei ist von Vorteil, daß die Bauform der Lageranordnung an die jeweiligen Platzverhältnisse im Einbauraum besonders günstig angepaßt werden kann und daß die Lageranordnung durch eine vergleichsweise breitbandige Dämpfung/Isolierung von eingeleiteten Schwingungen gute Gebrauchseigenschaften aufweist.

Der Befestigungsflansch kann aus einem tiefziehbaren Blech bestehen. Hierbei ist von Vorteil, daß der Befestigungsflansch einfach und kostengünstig herstellbar ist und eine haltbare Anbindung zwischen dem Befestigungsflansch, dem zweiten Federkörper und der Trägheitsmasse beispielsweise durch Vulkanisieren einfach vorgenommen werden kann. Die Trägheitsmasse besteht bevorzugt aus einem massiven metallischen Werkstoff. Im Rahmen der vorliegenden Erfindung wird eine möglichst große Anbindungsfläche der Trägheitsmasse am zweiten Federkörper und des zweiten Federkörpers am Befestigungsflansch der Vorzug gegeben. Eine gute Verbindung der Teile bleibt daher während einer langen Gebrauchsdauer unverändert erhalten.

Gemäß einer vorteilhaften Ausgestaltung ist es vorgesehen, daß der zweite Federkörper aus elastomerem Werkstoff besteht. Der zweite Federkörper weist bevorzugt eine Härte Shore A von 40 bis 60 auf. Der zweite Federkörper ist in Verbindung mit der Trägheitsmasse bevorzugt derart ausgelegt, daß eingeleitete Schwingungen im Bereich bis 400 Hz gedämpft/isoliert werden können. Gelangt die Lageranordnung beispielsweise zur Abstützung einer Verbrennungskraftmaschine in Kraftfahrzeugen zur Anwendung, werden leerlaufbedingte Schwingungen durch die Trägheitsmasse und den zweiten Federkörper isoliert und daher nicht auf das angrenzende Gummilager übertragen. Das Gummilager kann beispielsweise durch ein bekanntes Motorlager gebildet sein, das tieffrequente Schwingungen, die beispielsweise beim Überfahren von Bordsteinkanten entstehen, dämpft und höherfrequente Schwingungen, die beispielsweise durch das Abrollen der Reifen auf der Fahrbahn angeregt werden. Zusätzliche Maßnahmen innerhalb des Gummilagers zur Absorption leerlaufbedingter Schwingungen brauchen bei der erfindungsgemäßen Lageranordnung daher nicht vorgesehen zu sein. Der Befestigungsflansch, der zweite Federkörper und die Trägheitsmasse bilden einen separaten Schwingungsdämpfer für einen speziellen Frequenzbereich und sind dem Gummilager vorgeschaltet.

Der zweite Federkörper kann die Trägheitsmasse vollständig umschließen. Hierbei ist von Vorteil, daß die bevorzugt aus einem metallischen Werkstoff bestehenden Trägheitsmasse vor äußeren Einflüssen, beispielsweise vor Feuchtigkeitsbeaufschlagung und daraus resultierender Korrosion zuverlässig geschützt ist. Ferner besteht die Möglichkeit, daß der zweite Federkörper zwei voneinander unabhängige Trägheitsmassen umschließt. Daraus resultiert eine vergleichsweise breitbandigere Absorption von eingeleiteten Schwingungen.

Der zweite Federkörper, die Trägheitsmasse und der Befestigungsflansch können separat vom Gummilager herstellbar sein und eine vormontierbare Einheit bilden, die an das Gummilager anflanschbar ist. Hierbei ist von Vorteil, daß durch den modulhaften Aufbau der Lageranordnung eine Vielzahl von Kombinationsmöglichkeiten bestehen, unterschiedlich ausgebildete Gummilager mit voneinander abweichenden Einheiten, bestehend aus Befestigungsflansch, zweitem Federkörper und Trägheitsmasse zu kombinieren. Die Fertigstellung der Lageranordnung kann bereits vor der Montage des abzustützenden Teils vorgenommen werden.

Um einen möglichst einfachen und kostengünstigen Aufbau der Lageranordnung sicherzustellen, kann es vorgesehen sein, daß das Gummilager aus einem inneren ersten Stützkörper besteht, der von einem äußeren, ringförmig ausgebildeten zweiten Stützkörper mit radialem Abstand umschlossen ist, wobei in dem durch den Abstand gebildeten Spalt der erste ringförmig ausgebildete Federkörper angeordnet ist. Das Gummilager weist dadurch die Gestalt einer Hülsengummifeder auf, wobei die Schwingungsdämpfung durch die Werkstoffeigenschaften des ersten Federkörpers erfolgt. Das Gummilager ist derart abgestimmt, daß eingeleitete Schwingungen in einem Bereich von 5 bis 150 Hz gedämpft/isoliert werden können. Der erste Federkörper weist eine Härte Shore A von 30 bis 70, bevorzugt von 40 bis 60 auf. Hinsichtlich einer weiter vereinfachten Herstellung der Lageranordnung können der erste und der zweite Federkörper aus einem übereinstimmenden Werkstoff bestehen.

Der innere erste Stützkörper und der Befestigungsflansch können kraft- und/oder formschlüssig aneinander festgelegt sein. Einer Verschraubung der beiden Teile wird der Vorzug gegeben.

Der äußere Stützkörper kann an einem karosserieseitigen Widerlager abgestützt sein, und der Befestigungsflansch stütz bevorzugt das zu tragenden Teil ab.

Nach einer anderen Ausgestaltung besteht die Möglichkeit, die vormontierbare Einheit an einem hydraulisch dämpfenden Gummilager zu befestigen. Die daraus resultierenden verbesserten Gebrauchseigenschaften der Lageranordnung werden durch den vergleichsweise komplizierteren Aufbau des Gummilagers bewirkt.

Die erfindungsgemäße Lageranordnung kann zur Abstützung einer Verbrennungskraftmaschine in einem Kraftfahrzeug zur Anwendung gelangen. Für einen derartigen Anwendungsfall ist die Lageranordnung besonders vorteilhaft, da in Abhängigkeit einer Vielzahl von Parametern Schwingungen mit voneinander abweichenden Frequenzen/Amplituden in die Lageranordnung eingeleitet werden und von dieser gedämpft/isoliert werden sollen. Gelangt die Lageranordnung zur Abstützung einer Verbrennungskraftmaschine zur Anwendung, bewirkt die schwingfähig am Befestigungsflansch aufgehängte Trägheitsmasse eine Reduzierung leerlaufbedingter Schwingungen. Derartige Schwingungen werden dadurch vom Gummilager zumindest teilweise ferngehalten, wobei das Gummilager höher- und tieferfrequenter Schwingungen, die während der Fahrt des Kraftfahrzeugs auftreten, isoliert und dämpft.

Nachfolgend wird die beanspruchte Lageranordnung anhand der beigefügten Zeichnungen näher erläutert. Diese zeigen zwei Ausführungsbeispiele in schematischer Darstellung.

In den Fig. 1 und 2 ist ein erstes Ausführungsbeispiel der erfindungsgemäßen Lageranordnung gezeigt. In Fig. 1 ist die Lageranordnung aus Fig. 2 entlang der Linie A-A geschnitten dargestellt. In Fig. 2 ist das Lager aus Fig. 1 entlang des Schnitts B-B gezeigt.

In Fig. 3 ist einzweites Ausführungsbeispiel einer Lageranordnung gezeigt, wobei die vormontierbare Einheit, bestehend aus Befestigungsflansch, zweitem Federkörper und Trägheitsmasse abweichend von Fig. 1 ausgestaltet ist. Fig. 3 zeigt den Schnitt C-C aus Fig. 4.
In Fig. 4 ist der Schnitt D-D aus Fig. 3 dargestellt.

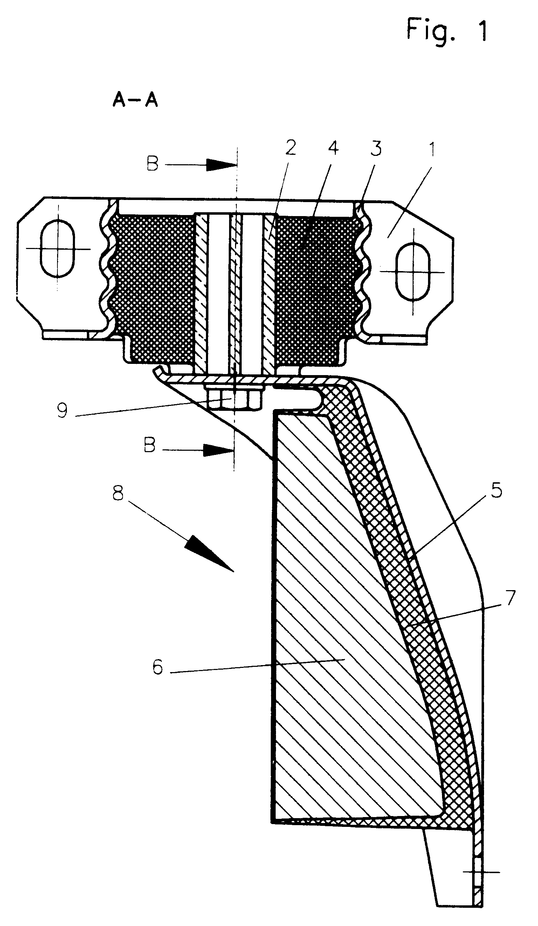

In den Fig. 1 bis 4 sind zwei Ausführungsbeispiele einer Lageranordnung gezeigt, die jeweils ein Gummilager 1 umfassen, dem eine vormontierbare Einheit 8, bestehend aus Befestigungsflansch 5, Trägheitsmasse 6 und zweitem Federkörper 7 vorgeschaltet ist. Der Befestigungsflansch 5 ist zur Befestigung einer Verbrennungskraftmaschine vorgesehen, während das Gummilager 1 karosserieseitig abgestützt ist. Der Befestigungsflansch 5 besteht in diesem Ausführungsbeispiel aus einem tiefziehbaren Blech. Das Gummilager 1 ist in den gezeigten Ausführungsbeispielen als Hülsengummifeder ausgebildet und mit einem inneren ersten und einem äußeren zweiten Stützkörper 2, 3 versehen, wobei die Stützkörper 2, 3 durch den ersten Federkörper 4 aufeinander abgestützt sind. In beiden Ausführungsbeispielen ist die Trägheitsmasse 6 vom zweiten Federkörper 7 vollständig umschlossen.

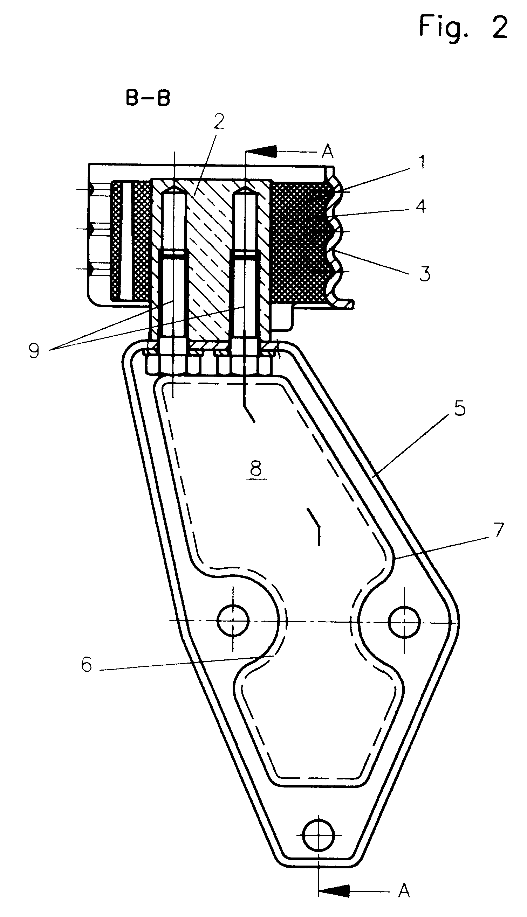

Das erste Ausführungsbeispiel aus den Fig. 1 und 2 zeigt eine einstückig ausgebildete Trägheitsmasse 6, die mittels des zweiten Federkörpers 7 am Befestigungsflansch 5 anvulkanisiert ist. Die durch diese Teile gebildete Einheit 8 ist durch zwei Befestigungsschrauben 9 mit dem inneren ersten Stützkörper 2 verbunden. Die Trägheitsmasse 6 besteht aus einem metallischen Werkstoff und ist in Verbindung mit dem zweiten Federkörper 7 zur Absorption von Leerlaufschwingungen der Verbrennungskraftmaschine im Bereich von 200 Hz vorgesehen.

In Fig. 2 ist die vormontierbare Einheit 8 in einer Ansicht zu sehen, wobei die Form der Trägheitsmasse 6 durch die unterbrochene Linie gezeigt ist.

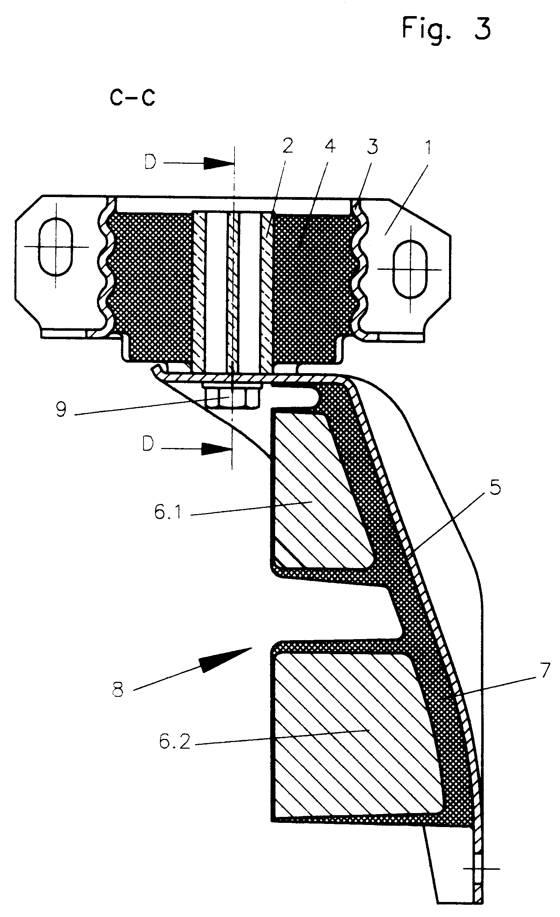

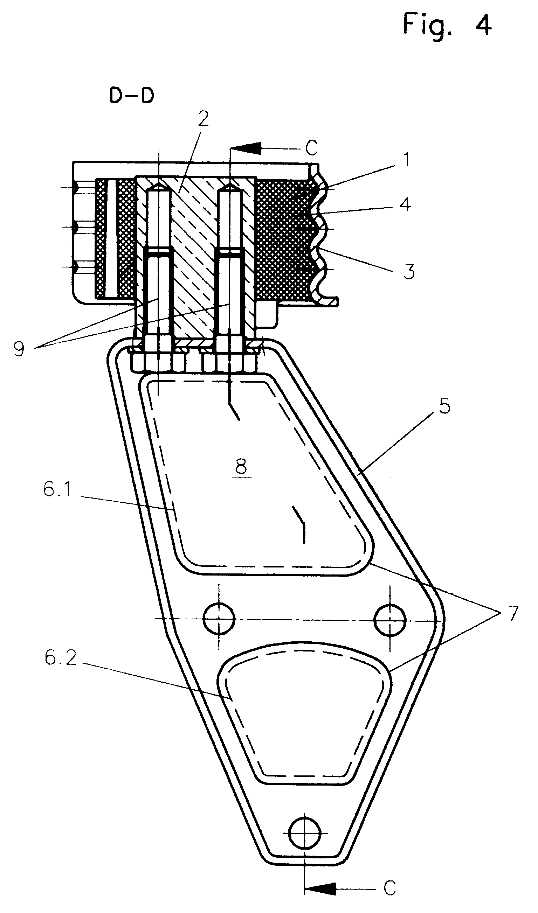

Das zweite Ausführungsbeispiel aus den Fig. 3 und 4 unterscheidet sich von dem zuvor beschriebenen dadurch, daß die Trägheitsmasse 6 zweiteilig 6.1, 6.2 ausgebildet ist. Die Trägheitsmassen 6.1, 6.2 sind unterschiedlich ausgebildet und zusammen mit dem zweiten Federkörper 7, der sie allseitig umschließt, derart abgestimmt, daß eine vergleichsweise breitbandigere Isolierung im Bereich von Schwingungen einer Frequenz von 70 bis 400 Hz erfolgen kann.

Befindet sich das Fahrzeug in Fahrt, werden die vergleichsweise hochfrequenten Schwingungen, die beispielsweise durch das Abrollen der Reifen auf der Straße entstehen und die tieferfrequenten Schwingungen, die beispielsweise beim Überfahren von Bordsteinkanten entstehen, durch den Gummikörper 1 isoliert/gedämpft. In diesen Betriebszuständen ist die vormontierbare Einheit 8 funktionstechnisch abgekoppelt.

## Patentansprüche

1. Lageranordnung, umfassend ein Gummilager, das durch einen ersten und einen zweiten Stützkörper gebildet ist, wobei die Stützkörper durch zumindest einen ersten Federkörper aus elastomerem Werkstoff aufeinander abgestützt sind, dadurch gekennzeichnet, daß zumindest einer der Stützkörper (2) mit einem Befestigungsflansch (5) starr verbunden ist und daß der Befestigungsflansch (5) und zumindest eine Trägheitsmasse (6) durch einen zweiten Federkörper (7) elastisch nachgiebig miteinander verbunden sind.

2. Lageranordnung nach Anspruch 1, dadurch gekennzeichnet, daß der zweite Federkörper (7) aus elastomerem Werkstoff besteht.

3. Lageranordnung nach Anspruch 1 bis 2, dadurch gekennzeichnet, daß der zweite Federkörper (7) die Trägheitsmasse (6) vollständig umschließt.

4. Lageranordnung nach Anspruch 1 bis 3, dadurch gekennzeichnet, daß der zweite Federkörper (7), die Trägheitsmasse (6) und der Befestigungsflansch (5) separat vom Gummilager (1) herstellbar sind und eine vormontierbare Einheit (8) bilden, die an das Gummilager (1) anflanschbar ist.

5. Lageranordnung nach Anspruch 1 bis 4, dadurch gekennzeichnet, daß das Gummilager (1) aus einem inneren ersten Stützkörper (2) besteht, der von einem äußeren ringförmig ausgebildeten zweiten Stützkörper (3) mit radialem Abstand umschlossen ist und daß in dem durch den Abstand gebildeten Spalt der erste ringförmig ausgebildete Federkörper (4) angeordnet ist.

6. Lageranordnung nach Anspruch 5, dadurch gekennzeichnet, daß der innere erste Stützkörpers (2) und der Befestigungsflansch (5) kraft- und/oder formschlüssig aneinander festgelegt sind.

7. Lageranordnung nach Anspruch 5 bis 6, dadurch gekennzeichnet, daß der äußere zweite Stützkörper (3) an einem karosserieseitigen Widerlager abgestützt und der Befestigungsflansch (5) mit dem zu lagernden Teil verbunden ist.

8. Verwendung einer Lageranordnung nach Anspruch 1 bis 7 zur Abstützung einer Verbrennungskraftmaschine in einem Kraftfahrzeug.
